(19) Europäisches Patentamt
European Patent Office
Office européen des brevets

(11) **EP 2 280 550 A1**

(12) **EUROPEAN PATENT APPLICATION**

(43) Date of publication:
**02.02.2011 Bulletin 2011/05**

(21) Application number: **09305597.8**

(22) Date of filing: **25.06.2009**

(51) Int Cl.:
*H04N 7/50* (2006.01)  *G06T 5/00* (2006.01)
*G06T 7/20* (2006.01)  *G06T 5/50* (2006.01)
*H04N 7/26* (2006.01)  *H04N 7/36* (2006.01)

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Thomson Licensing**
**92130 Issy-les-Moulineaux (FR)**

(72) Inventors:
• **Zhang, Hui**
**100080, Beijing (CN)**
• **Yang, Ji-Heng**
**100085, Beijing (CN)**

(74) Representative: **Rittner, Karsten**
**Deutsche Thomson OHG**
**European Patent Operations**
**Karl-Wiechert-Allee 74**
**30625 Hannover (DE)**

Remarks:
A request for correction of the description has been filed pursuant to Rule 139 EPC. A decision on the request will be taken during the proceedings before the Examining Division (Guidelines for Examination in the EPO, A-V, 3.).

(54) **Mask generation for motion compensation**

(57)   The invention is made in the technical field of video encoding and decoding. More precisely, the invention is related to video encoding and decoding based on motion estimation and/or motion compensation.

The invention proposes a method for generating a mask for partitioning a block BLK0 of a video image CURR, said method comprises the steps of using a first block BLK1 comprised and a different second block BLK2 for generating a non-negative difference block DIFF by assigning each of pixels of the non-negative difference block a value proportional to the absolute or squared difference between the corresponding pixel of the first block and the corresponding pixel of the second block, and using the non-negative difference block for generating the mask.

Using a non-negative difference block allows for better segmentation which results in a better mask.

Figure 1

**Description**

TECHNICAL FIELD

The invention is made in the technical field of video encoding and decoding. More precisely, the invention is related to video encoding and decoding based on motion estimation and/or motion compensation.

BACKGROUND OF THE INVENTION

In video coding, motion estimation/compensation is commonly employed to reduce temporal redundancy. In fact, changes in video content are often due to the motion of foreground objects in the depicted scene relative to a fairly static background.

In such scenario, a small amount of motion can result in a large difference in the values of pixels in a picture area, especially near a boundary of the moving object. Often, displacing an area or block of the prior picture by a few pixels in spatial location can result in a significant reduction in the amount of information that needs to be sent as a frame difference approximation. This use of spatial displacement in other frame(s) to form an approximation for the current frame is known as motion compensation. It has been the key component for almost all video coding standards since H.261.

Ideally, the partitioned picture area for different motions should be at the motion boundary (i.e. the boundary between a moving object and the background or other object). However, explicit encoding of an arbitrary boundary also requires lots of bits. As well, it is computationally expensive to locate the exact motion boundary in the video.

The commonly-used scheme of dividing the picture area for motion compensation is based on rectangular areas, e.g. 16x16 square blocks.

More accurate motion compensation can be achieved with smaller block size in a tree-structured scheme. In H.264 standard, the 16x16 block may be partitioned to four 8x8, two 8x16 or two 16x8 sub-blocks, and the 8x8 sub-block may be further partitioned to four 4x4, two 8x4 or two 4x8 parts. Smaller picture area for motion compensation may result better approximation for motion boundary, yielding more accurate motion compensation. Also, the limited block partition schemes will not increase too much overhead for coding the motion boundary.

But still, the degree of boundary approximation achievable by block partition schemes remains poor. Therefore, Jianle Chen, SangRae Lee, Kyo-Hyuk Lee and Woo-Jin Han proposed in "Object boundary based motion partition for video coding", Picture Coding Symposium (PCS) 2007, to assume -based on the continuity of the object boundary shape in the video sequence- that a similar shape boundary of each object can be found in a reference frame. Then a motion partition map of a current macroblock can be generated by simple threshold-based segmentation of the corresponding reference region.

The method proposed by Jianle Chen, SangRae Lee, Kyo-Hyuk Lee and Woo-Jin Han works well if the range of illumination values of the background depicted in the block used for generation of the motion partition map differs from the range of illumination values of the further depicted part of the moving object such that background and moving object can be separated well by the threshold based segmentation.

SUMMARY OF THE INVENTION

The proposed invention addresses the problem of generation of a mask for the motion partition in case where the range of illumination values of the background has a large overlap with the range the illumination values of the further depicted part of the moving object such that these value ranges cannot be separated by the threshold, directly.

That is, a method for generating a mask for partitioning a block of a video image according to claim 1 is proposed. 1. Said method comprises the steps of using a first block comprised and a different second block for generating a non-negative difference block by assigning each of pixels of the non-negative difference block a value proportional to the absolute or squared difference between the corresponding pixel of the first block and the corresponding pixel of the second block, and segmenting the non-negative difference block for generating the mask.

The invention exploits the assumption, that the part of the moving object depicted in the two different reference frames is likely to be identical and thus leads to difference pixel values closed to, or ideally equal to, Zero and below the threshold. As the object is moving, it is further very unlikely that the parts of the background which are depicted in the two different reference frames are identical to each other which allows for simple but still effective segmentation.

Thus, better segmentation of macroblocks in background and foreground is achieved which results in better compression.

The features of further advantageous embodiments are specified in the dependent claims.

That is, in an embodiment, a threshold-based segmentation is used for segmenting the non-negative difference block.

In another embodiment, said mask is a binary mask and said method comprises determining, for each pixel of the non-negative block, whether its value exceeds the threshold, and, if so, assigning a first value to a corresponding pixel of the mask, and, assigning, a different second value to the corresponding pixel of the mask, otherwise.

In yet another embodiment, said first block is comprised in a first reference frame and said different second block is comprised in a different second reference frame.

The invention further proposes a method for decoding a block of an image according to claim 5, a method for encoding a block of an image using a first block according to claim 6 and a storage device an encoded block of an image, said block being encoded according the method of claim 6.

And, a device for decoding a block of an image according to claim 8 as well as a device for encoding a block of an image using a first block, a different second block and a yet different third block, according to claim 9 is proposed.

BRIEF DESCRIPTION OF THE DRAWINGS

Exemplary embodiments of the invention are illustrated in the drawings and are explained in more detail in the following description. The exemplary embodiments are explained only for elucidating the invention, but not limiting the invention's scope and spirit defined in the claims.

In the figures:

Fig. 1    depicts an exemplary current frame to-be-encoded said frame to-be-encoded comprising an exemplary block depicting an object in front of a background, as well as two exemplary reference frames comprising exemplary reference blocks and an exemplary non-negative difference block

Fig. 2    depicts an exemplary single reference frame comprising three other exemplary reference blocks and another exemplary non-negative difference block.

EXEMPLARY EMBODIMENTS OF THE INVENTION

The invention may be realized on any electronic device comprising a processing device correspondingly adapted. For instance, the invention may be realized in a television, a mobile phone, a personal computer, a digital still camera, or a digital video camera.

Below, details of an improved block partition method for motion compensation are exemplarily described. The proposed partition scheme can represent arbitrary motion boundary, while keeping the overhead information limited.

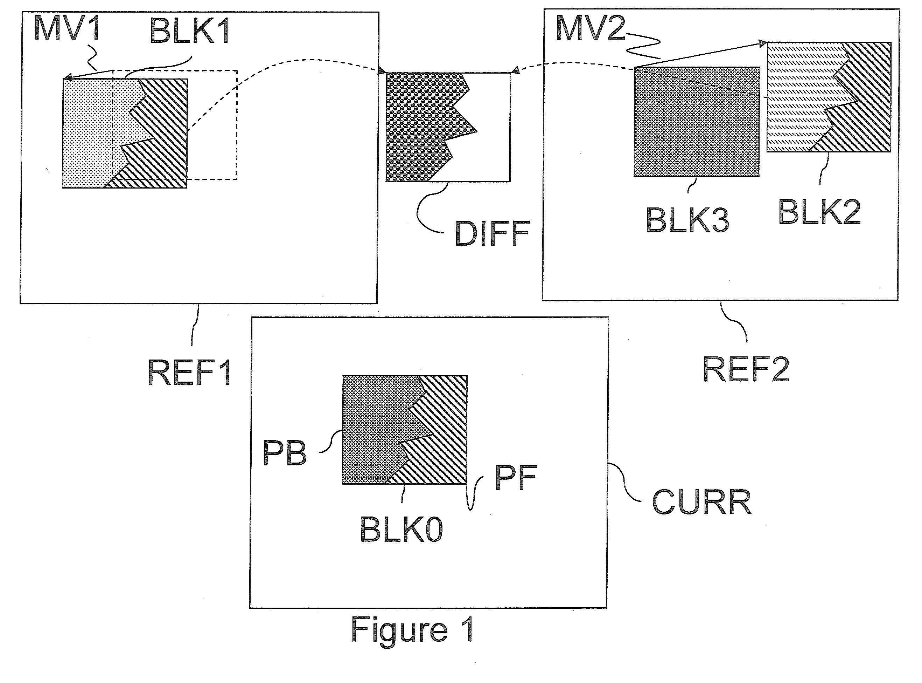

Given a block to-be-encoded BLK0 in current frame CURR, said block to-be-encoded BLK0 containing a motion boundary, as exemplarily shown in Fig. 1. For improved compression, it is desirable to predict the two parts, a foreground part PF (belonging to the occluding object) and a background part PB (belonging to the occluded object/background), using different blocks of the reference frame.

Supposed there is a first reference frame comprising a block BLK1 which depicts the occluding object part PF and a further block BLK2 in different second reference frame REF2, said further block BLK2, also depicting the occluding object part PF. Then, difference block DIFF, e.g.

$$DIFF(p) = abs(BLK1(p) - BLK2(p))$$

or

$$DIFF(p) = (BLK1(p) - BLK2(p))^2$$

wherein p may be any of the pixels, has pixel values in the region corresponding part PF which are equal to or closed to Zero. At the same time, difference block DIFF will likely have non-zero pixel values in the remaining part of difference block DIFF thus allowing usage of threshold based segmentation.

That is, the value range of the part of difference block DIFF corresponding PB will significantly overlap with the value range of the difference block's part depicting foreground PF, only, if the object has not moved or if the background has a high degree of self-similarity.

But, if the object has not moved between the reference image and the current image to-be-encoded, there is no need for using different reference blocks for predicting the foreground part PF and the background part PB but the entire block is well predictable using one block.

Similarly, if the background has a high degree of self-similarity it is likely that a reference block can be found which matches, both, foreground part and the remaining part of the block to-be-encoded BLK0 equally well.

Thus in an embodiment, threshold-based segmentation of the difference block DIFF is further used for deciding whether the block to-be-encoded is predicted using a single or two different reference blocks.

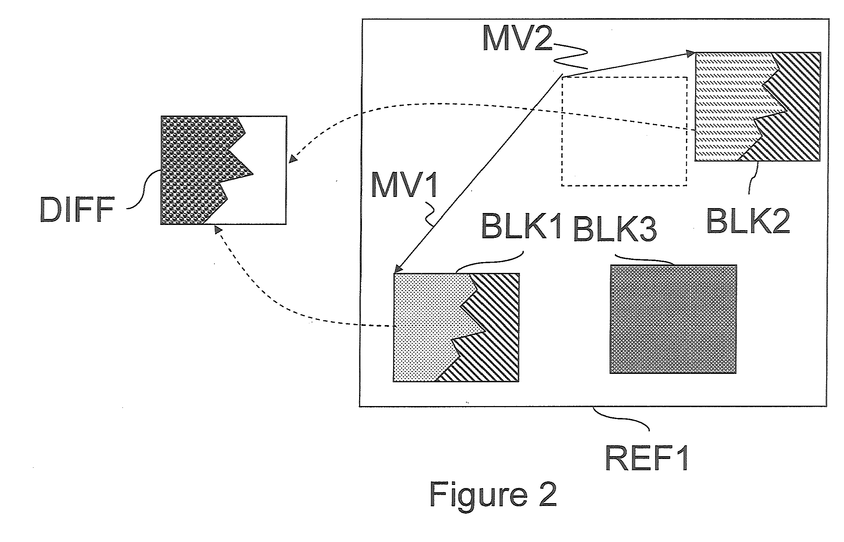

The further reference block BLK2 may even be comprised in the first reference frame REF1, also, if the first reference frame depicts two or more similar or identical objects of same orientation. This is exemplarily depicted in Fig. 2. Then, a single reference frame (e.g. frame REF1) is sufficient for encoding the block to-be-encoded.

For prediction which uses two different reference blocks, the difference block DIFF is used for generating a binary mask, e.g.

$$MASK(p) = (DIFF(p) > THR)$$

again, p may be any of the pixels and THR denotes the threshold. The binary mask may be refined further using connection constraints, clustering or filtering techniques or may be used as is. In an embodiment the mask is not binary but changes gradually in the area of the boundary, e.g.:

$$MASK(p) = (DIFF(p) > THR) + \frac{DIFF(p) - THR'}{THR - THR'}(DIFF(p) > THR')(DIFF(p) \le THR)$$

with *THR'<THR.* This non-binary mask may be useful for a partly translucent moving object, for instance. In another embodiment the mask is generated non-parametric pattern classification or clustering methods on the DIFF() values without usage of a threshold.

Then, the block to-be-encoded may be predicted as

$$PRE(p) = (\alpha * BLK1(p) + (1 - \alpha) * BLK2(p)) * MASK(p) + BLK3(p) * (1 - MASK(p))$$

with $\alpha \in [0;1]$, e. g. $\alpha=0.5.$

And a residual RES can be formed as

$$RES(p) = BLK0(p) - PRE(p)$$

Then, the block BLK0 may be encoded for transmission in a bit stream or for storage on an storage device, e.g. an optical storage medium like a BD-disc or an HD-DVD, using, for instance, a quantized transform of the residual and reference information referencing blocks BLK1, BLK2 and BLK3.

Block BLK3 may be comprised in a frame which further comprises at least one of said first block and said different second block.

The reference information may comprise information allowing identification of the reference frames REF1 and REF2 as well as relative motion information MV1 and MV2 describing the relative dislocation of BLK1 and BLK2 with respect to a block located in the respective reference frame at the same position as BLK0 in the current frame.

If the background is static, BLK3 may be positioned in the first or the second reference frame at the same position as block BLK0 in the current and, thus, information in which of the two reference frames block BLK3 is located is sufficient for retrieval of block BLK3 at decoder side. Even this information need not be sent explicitly, as it can be derived from relative motion information MV1 and MV2.

For example, supposed that reference frame REF1 is preceding the current frame, reference frame REF2 is succeeding the current frame and the foreground part PF is on the right side of block BLK0. Then, if motion between REF1 and REF2 is from left to right, BLK3 is located in reference frame REF2. And, if motion between REF1 and REF2 is from right to left, BLK3 is located in reference frame REF1.

Even if the background appears non static due to a camera movement, relative motion information MV3 describing the relative dislocation of BLK3 with respect to a block located in the respective reference frame at the same position as BLK0 in the current frame is sufficient as reference information while the respective reference frame may be determined using relative motion information MV1 and MV2, as described above.

In another embodiment, a flag is encoded to indicate the reference frame to which block BLK3 belongs.

At decoder side, the encoded reference information is decoded and the respective blocks are retrieved. Then, a mask is generated the same way as at encoder side and a prediction is generated using the mask and the retrieved blocks. Finally, the prediction is combined with a residual formed by decoding respective data comprised in the bit stream received or reproduced from the optical storage medium wherein decoding may comprise de-quantization and inverse transformation of the residual.

**Claims**

1. Method for generating a mask for partitioning a block (BLK0) of a video image (CURR), said method comprises the steps of

   - using a first block (BLK1) comprised and a different second block (BLK2) for generating a non-negative difference block (DIFF) by assigning each of pixels of the non-negative difference block a value proportional to the absolute or squared difference between the corresponding pixel of the first block and the corresponding pixel of the second block, and
   - segmenting the non-negative difference block for generating the mask.

2. Method according to claim 1, wherein a threshold-based segmentation is used for segmenting the non-negative difference block.

3. Method according to claim 2, wherein said mask is a binary mask and said method comprises

   - determining, for each pixel of the non-negative block, whether its value exceeds the threshold, and,
   - if so, assigning a first value to a corresponding pixel of the mask, and,
   - assigning, a different second value to the corresponding pixel of the mask, otherwise.

4. Method according to one of the claims 1 to 3, wherein said first block is comprised in a first reference frame and said different second block is comprised in a different second reference frame.

5. Method for decoding a block of an image, said method comprises the steps of

   - receiving an encoded residual and encoded reference information referencing a first block, a different second block and a yet different third block,
   - decoding the received residual and the received reference information,
   - using the decoded reference information for retrieving said first block, said different second block and said yet different third block from a storage device,
   - using the first block and the different second block for generating a mask according to one of the claims 1 to 4,
   - generating a fused block by fusing the first block and/or the second different block with the yet different third block using the generated mask,
   - using the residual and the fused block for reconstructing the block.

6. Method for encoding a block of an image using a first block, a different second block and a yet different third block, said method comprises the steps of

   - using the first block and the different second block for generating a mask according to one of the claims 1 to 4,
   - generating a fused block by fusing the first block and/or the different second block with the yet different third block using the generated mask,
   - using the difference between the fused block and the block to-be-encoded for determining a residual,
   - encoding the residual and reference information referencing said first block, said different second block and said yet different third block.

7. Storage device an encoded block of an image, said block being encoded according the method of claim 6.

8. Device for decoding a block of an image, said device comprises

- storage means storing reference frames,
- receiving means for receiving an encoded residual and encoded reference information referencing a first block, a different second block and a yet different third block,
- decoding means for decoding the received residual and the received reference information,
- retrieving means adapted for using the decoded reference information for retrieving said first block, said different second block and said yet different third block from one or more reference frames stored in the storage device,
- mask generating means adapted for using the first block, the different second block for generating a mask according to one of the claims 1 to 4,
- block fusing means adapted for generating a fused block by fusing the first block and/or the different second block with the yet different third block using the generated mask and
- block reconstructing means adapted for using the fused block and the residual for reconstructing the block.

9. Device for encoding a block of an image using a first block, a different second block and a yet different third block, said device comprises

- mask generating means adapted for using the first block, the different second block for generating a mask according to one of the claims 1 to 4,
- block fusing means adapted for generating a fused block by fusing the first block and/or the different second block with the yet different third block using the generated mask,
- residual determining means adapted for using the difference between the fused block and the block to-be-encoded for determining a residual,
- encoding means adapted for encoding the residual and reference information referencing said first block, said different second block and said yet different third block.

10. Method according to one of the claims 5 or 6 or device according to one of the claims 7 to 9, wherein said yet different third block is comprised in a frame which further comprises at least one of said first block and said different second block.

Figure 1

EP 2 280 550 A1

Figure 2

Europäisches Patentamt

European Patent Office

Office européen des brevets

## EUROPEAN SEARCH REPORT

Application Number

EP 09 30 5597

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TSOLIGKAS N A ET AL: "Hybrid Object-Based Video Compression Scheme Using a Novel Content-Based Automatic Segmentation Algorithm" COMMUNICATIONS, 2007. ICC '07. IEEE INTERNATIONAL CONFERENCE ON, IEEE, PI, 1 June 2007 (2007-06-01), pages 2654-2659, XP031126073 ISBN: 978-1-4244-0353-0 * abstract * * page 2655, left-hand column, lines 22-26, 35-37 * * page 2655, right-hand column, lines 27-32 * * page 2656, right-hand column, lines 10-21, 27-30 * * figures 1, 2 * ----- | 1-4 | INV. H04N7/50 G06T5/00 G06T7/20 G06T5/50 H04N7/26 H04N7/36 |
| X | ARVANITIDOU M G ET AL: "Global motion estimation using variable block sizes and its application to object segmentation" IMAGE ANALYSIS FOR MULTIMEDIA INTERACTIVE SERVICES, 2009. WIAMIS '09. 10TH WORKSHOP ON, IEEE, PISCATAWAY, NJ, USA, 6 May 2009 (2009-05-06), pages 173-176, XP031467298 ISBN: 978-1-4244-3609-5 * abstract * * section 3.2 * * page 175; table 1 * ----- | 1-4 | TECHNICAL FIELDS SEARCHED (IPC) H04N G06T |
| X | EP 1 403 821 A1 (SONY CORP [JP]) 31 March 2004 (2004-03-31) * paragraph [0199] - paragraph [0206] * * paragraph [0300] - paragraph [0307] * * figures 20, 42 * ----- -/-- | 1-4 | |

The present search report has been drawn up for all claims

| Place of search | Date of completion of the search | Examiner |
|---|---|---|
| The Hague | 4 March 2010 | Mayer, Claudia |

EPO FORM 1503 03.82 (P04C01)

Europäisches
Patentamt

European
Patent Office

Office européen
des brevets

## EUROPEAN SEARCH REPORT

**Application Number**

EP 09 30 5597

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DIVORRA ESCODA O ET AL: "Geometry-Adaptive Block Partitioning for Video Coding" 2007 IEEE INTERNATIONAL CONFERENCE ON ACOUSTICS, SPEECH, AND SIGNAL PROCESSING 15-20 APRIL 2007 HONOLULU, HI, USA, IEEE, PISCATAWAY, NJ, USA, 15 April 2007 (2007-04-15), pages I-657, XP031462947 ISBN: 978-1-4244-0727-9 * the whole document * | 1-10 | |
| A | GUARAGNELLA C ET AL: "Object oriented motion estimation by sliced-block matching algorithm" PATTERN RECOGNITION, 2000. PROCEEDINGS. 15TH INTERNATIONAL CONFERENCE ON SEPTEMBER 3-7, 2000; [PROCEEDINGS OF THE INTERNATIONAL CONFERENCE ON PATTERN RECOGNITION. (ICPR)], LOS ALAMITOS, CA, USA,IEEE COMPUT. SOC, US, vol. 3, 3 September 2000 (2000-09-03), pages 857-860, XP010533421 ISBN: 978-0-7695-0750-7 * abstract * * sections 1-3 * | 1-10 | |
| A | EDSON M HUNG ET AL: "On Macroblock Partition for Motion Compensation" IMAGE PROCESSING, 2006 IEEE INTERNATIONAL CONFERENCE ON, IEEE, PI, 1 October 2006 (2006-10-01), pages 1697-1700, XP031048982 ISBN: 978-1-4244-0480-3 * the whole document * | 1-10 | |

TECHNICAL FIELDS
SEARCHED (IPC)

-/--

The present search report has been drawn up for all claims

| Place of search | Date of completion of the search | Examiner |
|---|---|---|
| The Hague | 4 March 2010 | Mayer, Claudia |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

Europäisches
Patentamt

European
Patent Office

Office européen
des brevets

**EUROPEAN SEARCH REPORT**

Application Number

EP 09 30 5597

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KONDO S ET AL: "A Motion Compensation Technique Using Sliced Blocks In Hybrid Video Coding" IMAGE PROCESSING, 2005. ICIP 2005. IEEE INTERNATIONAL CONFERENCE ON GENOVA, ITALY 11-14 SEPT. 2005, PISCATAWAY, NJ, USA,IEEE, vol. 2, 11 September 2005 (2005-09-11), pages 305-308, XP010851050 ISBN: 978-0-7803-9134-5 * the whole document * | 1-10 | |

TECHNICAL FIELDS
SEARCHED        (IPC)

The present search report has been drawn up for all claims

| Place of search | Date of completion of the search | Examiner |
|---|---|---|
| The Hague | 4 March 2010 | Mayer, Claudia |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 09 30 5597

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2010

| Patent document cited in search report | | Publication date | Patent family member(s) | | Publication date |
|---|---|---|---|---|---|
| EP 1403821 | A1 | 31-03-2004 | CA | 2420020 A1 | 18-02-2003 |
| | | | CN | 1471692 A | 28-01-2004 |
| | | | WO | 03003304 A1 | 09-01-2003 |
| | | | JP | 2003016452 A | 17-01-2003 |
| | | | MX | PA03001520 A | 24-06-2003 |
| | | | US | 2004067040 A1 | 08-04-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Chen ; SangRae Lee ; Kyo-Hyuk Lee ; Woo-Jin Han.** Object boundary based motion partition for video coding. *Picture Coding Symposium,* 2007